# EUROPEAN PATENT SPECIFICATION

(11) **EP 4 059 099 B1**
(45) Date of publication and mention of the grant of the patent: **20.12.2023**
(21) Application number: 20808512.6
(22) Date of filing: 31.10.2020
(51) Int. Cl.: H02G 1/00, H02G 3/10, H01R 12/67, H02G 1/12, H02G 3/16, H02G 3/30

(54) **WALL-MOUNTED BOX FOR ELECTRICAL SYSTEMS AND INSTALLATION METHOD THEREOF**
WANDMONTIERTE DOSE FÜR ELEKTRISCHE SYSTEME UND INSTALLATIONSVERFAHREN DAFÜR
BOÎTIER MURAL POUR SYSTÈMES ÉLECTRIQUES ET SON PROCÉDÉ D'INSTALLATION

(30) Priority: 11.11.2019 IT 201900020715
(43) Date of publication of application: 21.09.2022
(73) Proprietor: NIR S.R.L., 70100 Bari (IT)
(72) Inventor: DE FECONDO, Diego, 70100 Bari (IT)
(74) Representative: Bruni, Giovanni
(86) International application number: PCT/IB2020/060250
(87) International publication number: WO 2021/094865

(56) References cited:
- EP-A1- 2 280 466
- US-A- 4 858 401
- US-A1- 2009 168 733
- CommScope: "Undercarpet Cabling Installation", Youtube, 22 January 2016 (2016-01-22), page 1 pp., XP054980522, Retrieved from the Internet: URL:https://www.youtube.com/watch?v=9Wcnxl hxsKk [retrieved on 2020-06-04]

## Description

### Technical Field of the Invention

In general, the application of the present invention regards the electrical wiring of buildings.
In particular, the identified solution concerns the positioning and installation of boxes suitable for housing electrical sockets, or control systems, or various sensors on the walls of the rooms, when these walls are internally made, or covered, with panels made of plasterboard or, alternatively, with other similar materials.
At the state-of-the-art, the use of plasterboard panels is convenient in many circumstances: in fact, plasterboard is an easy workable material, which allows the creation of walls with a very regular internal finish, enabling, at the same time, a technique to make walls with very detailed shapes and very fast and flexible construction. Furthermore, by making plasterboard walls, it is very simple to obtain hollow space inside the walls themselves, an interspace that can be exploited to create thermal or acoustic insulation. Therefore, the use of plasterboard, for the finishing of internal walls of buildings, constitutes a solution that already finds significant use in the construction sector. In the future, it cannot be excluded that, in addition to plasterboard (which today represents a material with an optimal quality-price ratio), panels made of other materials can also be used, with equally suitable characteristics, and even better, for creating walls of buildings and, in general, for applications in the fields of construction, and the supply of furniture.

### Known art

Typically, when the walls in a building are made of plasterboard, the systems in general, and in particular the electrical systems, take advantage of the hollow spaces that are formed inside the walls.

In the case of electrical systems, the cables are passed through suitable ducts consisting of flexible pipes (so-called corrugated pipes) in plastic material, typically laid inside the wall; or, quite often in commercial buildings and very rarely in residential buildings, the systems are distributed in other types of ducts installed externally, generally on the wall.

These ducts, inside which the electrical cables pass (which in the case of plasterboard walls, as mentioned, are normally placed inside the interspace obtained between two plasterboard panels), typically, connect boxes of various types and sizes. Some of these boxes house switches or electrical sockets, others contain electrical control units or other electronic devices, others contain sensors of various kinds, others are junction and switching boxes for circuits. These boxes are installed on the wall by making a hole in the plasterboard panel at the desired point, and connected to one or more ducts which must therefore be prepared in advance, in order to connect all points where the installation of one of these boxes is expected. Typically, the boxes according to the known art are installed at a depth that go beyond the layers of plasterboard, thus requiring them to be protected with special silicate shells placed so as to create the protection of the box for fire-fighting purposes.

This method of installing the electrical system of a building has the advantage (probably the only advantage) of installing the electrical system as a typical system, as the ones installed in buildings with masonry walls. In fact, when the pipes are laid to connect the various boxes (whatever type they are), nothing changes whether they are bricked into the walls or floors (as happens in buildings with masonry walls, after a laying trace has been made), or they follow paths inside the plasterboard walls: the system is conceived and built in the same way.

On the other hand, this method of installation, currently practiced with wide diffusion, and briefly described above, has a number of contraindications.

A first type of contraindications, common to both masonry and plasterboard walls, is the scarce flexibility of positioning of the boxes. In fact, the ducts must be prepared in advance and the boxes must be positioned where designed from the beginning. Any changes, for the addition of new boxes or for their displacement, involves works of a certain impact, so much so that, in common practice, significant compromises are frequently accepted in the construction of the systems, in order to avoid such modifications.

Another type of contraindications concerns the issues of insulation, both thermal and acoustic. In fact, the ducts are privileged paths for the propagation of vibrations (sounds) and heat: in fact, they define propagation paths which, albeit long and tortuous, cross the walls.

Finally, a very important type of contraindication, which is often underestimated, concerns safety. In fact, the paths determined by the ducts are also favored paths for the transmission of fumes and flames that can be generated in the event of fires or explosions, contributing to the faster propagation of the damage caused by these eventualities. In this regard, it is observed that, in the event of a fire, there are more deaths for intoxication from fumes than for fire: and the fumes propagate in the various rooms through the pipes. Consequently, designing systems in which the use of piping is reduced or even eliminated is not a minor issue.

There is a known technology, although not very widespread for now, which very well obviates most of these contraindications.

This is a new technology that is based on the use of particular conductor cables to be used in the electrical system of a building: the so-called "ribbon cables". These cables appear as flat and thin ribbons, which can be laid between two sheets of plasterboard, or under a panel which in turn is made to adhere to an underlying wall of any type, or even, they can be laid on the surface of masonry walls, and then covered with thin layers of plaster, or special smoothing compound, or other materials for finishing the walls.

It should be noted that the description of the present invention will be illustrated, for convenience, with reference to plasterboard walls, or walls covered with plasterboard; however, the inventive concepts are valid for any material used to make any type of wall in which the external surface is made up of covering panels, even of low thickness, of the order of 6-15 mm (typically 12,5 mm). Obviously, the invention also applies to in the case of panels of greater thickness.

Before describing the invention, it is useful to briefly describe how these so-called newly designed "ribbon cables" are made.

Said "ribbon cable" includes inside a certain number of strips (or tapes) of conductive material (typically copper). These conductive strips can be arranged side by side without being in electrical contact with each other, and covered on the two faces by an insulating sheath which, in addition to insulating the conductors, keeps them spaced apart and parallel.

Depending on the needs or uses, these "ribbon cables" can be made including a variable number of conductive tapes; so that there are "ribbon cables" comprising two, three or any number of conductors (or even fiber optic cables for data, video, etc.). Typically, the insulating sheaths are adhesive coated on their external surface in order to facilitate their laying along the desired line paths. These "ribbon cables" do not require ducts, they are attached (thanks to the adhesive face) to the wall, or to the panel, and then covered, typically with an additional finishing panel placed on the wall itself.

It is observed that it is possible to obtain such "ribbon cables" with thicknesses lower than a millimeter, typically from 0.25 to 0.35 mm; in any case, these are almost negligible thicknesses when compared to the measures that define the typical building construction accuracy.

In the case of plasterboard walls, the typical installation methodology envisages positioning these "ribbon cables" between two coupled sheets of plasterboard; in fact, to give consistency to the wall, double sheets are frequently used, and the so-called "ribbon cables" adapt perfectly to be interposed between the two coupled panels.

In general, it is clear that whenever an internal wall of an environment is externally finished with a panel (or slab) of any material, which is made to adhere to an underlying wall surface, it is very convenient to lay a "ribbon cable" under this surface finishing panel, thus creating efficient electrical wiring.

It should be noted that these wiring do not require ducts or pipes of any kind; therefore, they are extremely safe, especially from the point of view of the propagation of fires and of the fumes they generate. In other words, the use of this type of wiring has many advantages in terms of fire safety, and allows to create fire and/or smoke barriers without weak parts (such as the pipes prepared for the wiring of the traditional systems). In this regard, it is noted that the "ribbon cable" technology has been tested with respect to resistance to heat (i.e. fire), and has excellent performance: resistance in continuity over two hours at 850°C, and 73 minutes in destructive test at the reached temperature of 983 °C.

In addition, the absence of pipes inside the walls generally improves the insulation properties of the walls, both from the sound point of view and from the thermal point of view.

In theory, the cabling made with these "ribbon cables" can be coupled to the traditional boxes used in systems with traditional cabling (on cable ducts). However, the use of traditional boxes would require to drill deeply into the wall (partially limiting the advantages of insulation and fire resistance described above) and, above all, would not go well with scenarios where the requirement of installation flexibility is increasingly important.

It is noted that the flexibility of installation of electrical sockets is a requirement of particular (and growing) importance in the context of future scenarios, which appear to be characterized by at least two prerogatives:
a. the progressive installation of the so-called "smart objects", which will require power in many more points than the ones normally set up indoors, and
b. the massive use of diffused LED lighting, which will increasingly replace classic lighting which is typically based on a few light points per room.

It is therefore desirable to make wiring with architectures different from those currently adopted for electrical systems, so that these can support the flexibility needs that lie ahead in the near future.

From a design point of view, it is therefore foreseeable that the new-concept electrical systems will pass from being designed with "star" architectures (today the most widespread) to "bus" architectures.

Simplifying the concept, it can be briefly stated that in "star" architectures it is envisaged to bring a pair or more wires to each light point, each socket and each switch, starting from a limited number of concentration and switching boxes, which must be suitably positioned in advance inside the building; in "bus" architectures, one or more power supply lines can be provided that carry voltage (in principle both direct and alternate voltages) throughout the building, running almost anywhere along all the perimeters of the rooms (perhaps at different heights) and traversing ceilings or floors.

In "bus" architectures, loads can be connected to these live lines at any point without interrupting them at the contact points. In these architectures the switches act directly on the load, without interrupting the power supply line at a remote point with respect to the load itself, this means that the on/off commands (or any other regulation), if must be positioned remotely with respect to the load, for reasons of ease of use, they must be implemented by transmitting a command signal, and not, as occurs in "star" systems, providing for the physical opening of an electrical circuit, by operating a switch.

It should be noted that the present invention does not specifically focus on the question of the commands which, as mentioned, being based on an actual transmission of them, require the provision of a "data bus". Nor does the invention concern the innovations that can be introduced in electrical systems as a result of the use of "bus" architectures. The invention, on the other hand, focuses on indicating a solution for the efficient and convenient positioning of the electricity withdrawal points at any point of a live line such as those indicated above, i.e. built with a "bus" based on the use of "ribbon cables" installed under a panel (typically plasterboard) as explained above; these voltage pick-up points being a socket, a light point or, in general, a load installation point.

The known art actually proposes some solutions that represent the closest prior art with reference to the solution taught in the present invention, such as, for example, US 2009/168733 A1 - ("Wireless Access Points" - MacFadyen D.N. et al.], and the Youtube video posted on Jannuary 22nd 2016 by CommScope, and titled "Undercarpet Cabling Installation". (URL: https://www.youtube.com/watch?v=9WcnxlhxsKk)

However, none of these solutions appears satisfactory to cope with all the requisites identified to conceive the present invention.

### Description of the Invention

The main purpose of the present invention, therefore, is to indicate a new type of system comprising a box, a "ribbon cable" and a finishing panel, and a new installation methodology, suitable for extracting a power supply interface from a live line of a wired electrical system with "bus" architecture, and made with "ribbon cables"; this in order to be able to power a load, connecting it via a normal electrical socket or providing other forms of contact (e.g. to connect the load directly without providing a socket/plug coupling).

Another object of the present invention is to make this box so that it can be applied easily and with minimal impact on the installation wall to any point of the live line. In particular, avoiding to drill deeply into the wall, i.e. drilling only the surface panel below which the line runs.

This reduced invasiveness of the installation (in terms of intervention on the wall) must also allow to achieve the further aim of facilitating the removal of these boxes and the restoration of the wall, so that the electrical systems created in this way offer a particular flexibility of modification and adaptation.

In general, however, neither the installation of a new box, nor its removal, must produce an impact that requires some modification in the underlying wiring.

Other very important purposes of the present invention, which are achievable also because the invention is based on the exploitation of "ribbon cables", concern aspects of safety and insulation.

Therefore, it is required that the boxes according to the invention do not constitute significant weaknesses, with respect to the formation of paths with less insulation. Meaning any type of insulation: against the propagation of sounds, heat, fumes, flames, etc....

The indicated objectives can be reached by means of a box for extracting electrical contacts from an electric line made by means of a "ribbon cable" placed under a surface finishing panel of a wall or ceiling, in order to make available and accessible said extracted contacts to an external load; and said box for extracting electrical contacts is characterized in that:
✔ when installed, it is partially inserted in the wall, above the trait of said electric line where it is intended to extract the contacts to be made available outside, and it is inserted only for the thickness corresponding to that of said surface finishing panel, and
✔ it comprises at least one contact electrode able to realize electrical contact with a conductive strip of said electric line made by means of a "ribbon cable", and said at least one contact electrode, is positioned in such a way that when said box for extracting electrical contacts is installed, is pressed on said conductive strip, and in electrical contact with it.

It is observed, and it is stressed once more, that the characterizing part of the box for extracting electrical contacts, according to the teachings of the invention, concerns some functional characteristics relating to the pure extraction of contacts from a wall in which a particular wiring, that is a wiring made by means of a "ribbon cable", is positioned under a surface finishing panel of the wall itself.

The invention is not particularly characterized by the structure of the box towards the outside of the wall. In fact, once the power contacts are accessible inside the installed box, this is designed to offer a general power supply interface in a plurality of different shapes, suitable for connecting a load. Therefore, the various possible standards of electrical socket can be obtained, as well as generic loads can be directly connected (e.g. light points, or various sensors). In this regard, it is noted that the boxes according to the invention (as will also be better shown below, illustrating some implementation cases) enable the creation of low thickness electrical sockets.

It should also be said right away that the electrodes suitable for making electrical contact with said electrical line can also be made in different ways. In particular, contacts between electrode and conductive tape can be specifically conceived for supporting a very fast and simple installation method. In fact, one of the fundamental purposes of the invention is precisely that of having a technology that allows flexible positioning, of devices of all types, which require power, within generic environments.

Note that the installation of such a box can be extremely simple, and consists only in fixing the box itself to the wall, in the desired point after a hole has been made in the surface finishing panel to insert the box. The contacts are formed automatically, taking care to adequately prepare the perforation of the surface finishing panel, and to adjust the box so that the recess depth is substantially equal to the thickness of the finishing panel. Obviously, either boxes with adjustable (or in any case variable) recess depth can be conceived, so that they can adapt to panels of different thickness, or boxes with fixed recess depth; in the latter case, specific boxes must be used for the thickness of the panel on which the installation is intended.

In particular, the panel drilling operation, and the preparation for the installation of the box, can be carried out with a very fast and repeatable procedure, using appropriate tools specifically designed for this operation. Therefore, a box according to the teachings of the present invention can define an installation method, also subject to protection within the scope of the present invention.

The main advantage of the present invention consists in the fact that a box for extracting electrical contacts from an electric line made by means of a "ribbon cable" laid under a surface finishing panel, made according to the teachings of the present invention, together with the relative method of installation, meets all the main requirements for which it was conceived.

The following description highlights the relative simplicity of both the box for extracting electrical contacts and the installation method. This simplicity is an advantage of the invention. In fact, the exercise of inventive activity was profuse in setting a new general objective for the construction of electrical systems in buildings, and in defining the underlying technical problem. The described invention, albeit simple, constitutes a solution and an answer to problems that the known art does not even address in the terms that have been identified, introducing a very important innovation for the benefit of the design of the electrical systems of the future.

### Brief Description of the Drawings

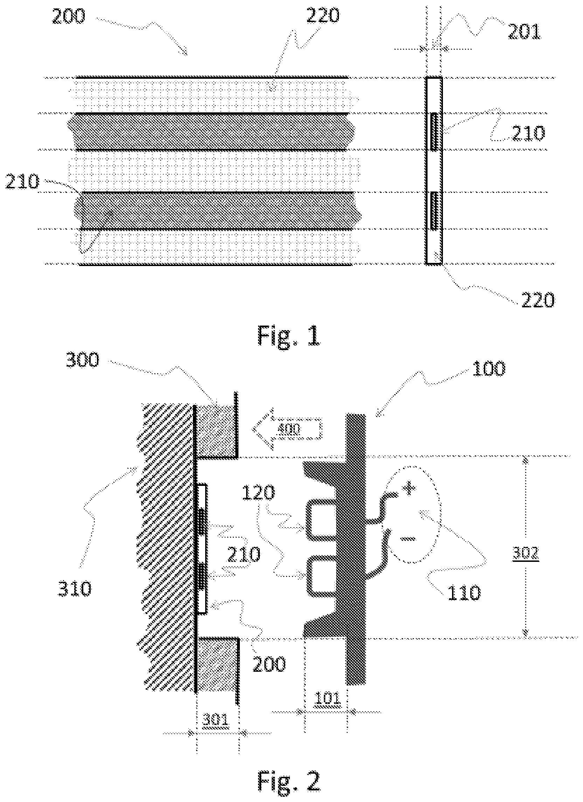

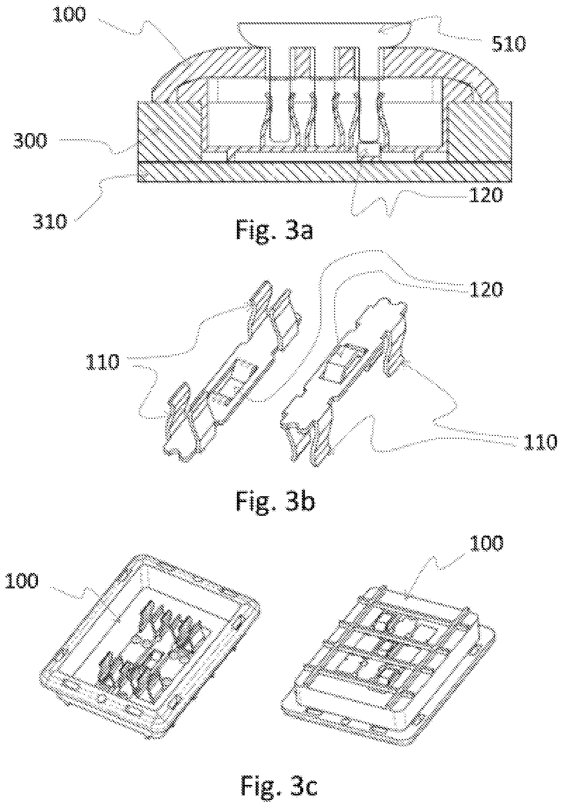

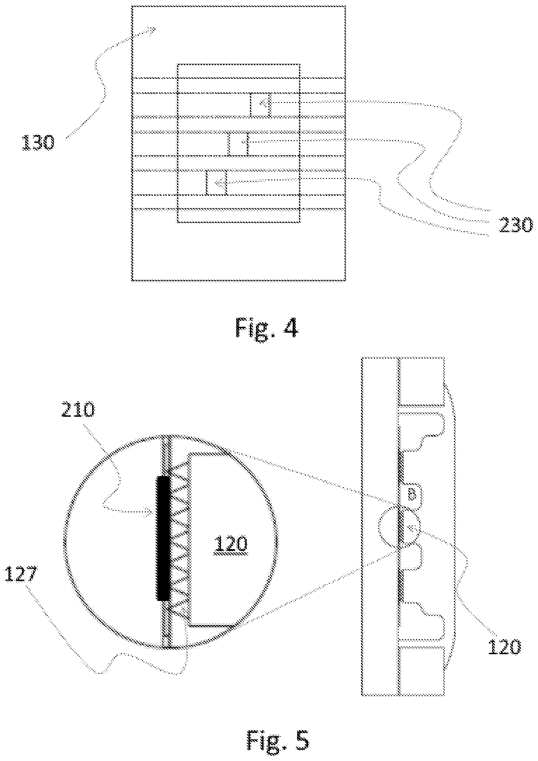

This invention also has further advantages, which will become more evident from the following description, from some examples of practical embodiments, which illustrate further details, from the attached claims which form an integral part of the present description, and from the attached figures in which:
✔ Figure 1 shows, schematically, two orthogonal views of a "ribbon cable" according to the known technique, and of the type suitable for the application of the present invention.
✔ Figure 2 shows, in a schematic and simplified way, the essential principles of the electrical coupling between the box for extracting electrical contacts according to the invention and an electrical line made with a "ribbon cable" according to the prior art, and of the suitable type to be employed in the present invention.
✔ Figure 3a shows the section taken from a real implementation project of a box for extracting electrical contacts according to the invention, in which the contacts are made available through a low-thickness socket/plug coupling.
✔ Figure 3b shows, in detail, the contact electrodes of the box for extracting electrical contacts according to the embodiment represented in Figure 3a.
✔ Figure 3c shows two axonometric views of the box for extracting electrical contacts according to the embodiment represented in Figure 3a.
✔ Figure 4 shows the template used in the installation process of a box for extracting electrical contacts according to the invention in the form of implementation represented in Figure 3a.
✔ Figure 5 shows another form of implementation of a box for extracting electrical contacts according to the invention.

### Detailed Description

Figure 1 shows two orthogonal views of a piece of "ribbon cable" suitable for the application of the present invention.

The number 200 indicates the "ribbon cable" as a whole. In the top view (left view) the presence of two conductive strips, indicated with the number 210, can be appreciated. The "ribbon cable" 200 shown in Figure 1 is extremely simple as it contains only two conductive strips 210, which are sufficient for a first description of this type of cables. A "ribbon cable" 200, like the one in the figure, with two conductors is suitable for carrying a voltage in both the alternating and direct regime; ribbon cables with three conductors allow to carry also the neutral; it is then possible to make "ribbon cables" with four conductors to carry three-phase power supplies; and in general it is possible to propose "ribbon cables" with a further greater number of conductors, in order to accommodate any power supply architecture envisaged in the project (e.g. by distributing both alternating and direct power supplies, perhaps to different tensions).

The conductive strips 210 are kept parallel, spaced and insulated by a protective sheath, indicated with the number 220.

In the sectional view (on the right side of Figure 1) it can be appreciated how the two conductive strips 210 are flat and thin, and how they are contained inside the protective sheath 220. The number 201 indicates the thickness of the "ribbon cable" 200. Said thickness 201 represents the most interesting dimensional data of these types of cables. In fact, it is possible to make "ribbon cables" 200 with excellent conductive properties, and excellent insulation, while maintaining thicknesses of the order of one millimeter, and even lower. It is precisely this dimension, so subtle, that allows the creation of non-invasive electrical systems that are very suitable for supporting future scenarios characterized by the need to provide power to a very large number of points inside buildings.

Figure 2 shows the essential principles of the electrical coupling between the box for extracting electrical contacts according to the invention, indicated as a whole with the number 100, and an electrical line made with a "ribbon cable" 200, like the one shown in Figure 1.

The view proposed in Figure 2 shows a section orthogonal to the plane of a wall and perpendicular to the direction of the "ribbon cable" 200; the section plane crosses the wall precisely in correspondence with a zone in which said box for extracting electrical contacts 100 according to the invention must be installed.

Said "ribbon cable" 200 is laid on an "underlying wall" indicated with the number 310. The surface of said "underlying wall" 310 can be made of plasterboard or any other material; the "underlying wall" 310 does not need to have particular aesthetic value, as it is then covered with an additional finishing panel. Said further finishing panel is indicated with the number 300, and, in the section of Figure 2, it appears interrupted in two parts, since said finishing panel 300 is perforated in order to let the "ribbon cable" 200 accessible. Said box for extracting electrical contacts 100 is shown in Figure 2 detached from the wall, and to be installed it must be inserted in the opening obtained in the finishing panel 300, moving it as indicated by the arrow 400.

Some essential dimensional characteristics of said box for extracting electrical contacts 100 concern the part of the latter which, after installation, is recessed in the opening obtained in the finishing panel 300. The measurement of the depth of the recessed part is indicated with the number 101, and must substantially correspond to the thickness of the finishing panel 300, indicated with the number 301, while the height of the recessed part must correspond to the height of the opening obtained in the finishing panel 300, and indicated in Figure 2 with the number 302. Obviously, also the measurement of the width of this recessed part (not appreciable in the proposed section, as it develops in the direction orthogonal to the sheet) must, similarly, correspond to the width of the opening obtained in the finishing panel 300.

By correspondence of measurements, it is intended that these must be substantially the same, with the foresight that the measurements referring to the box for extracting electrical contacts 100 must, eventually, be slightly smaller than those referring to the finishing panel 300, in order to provide a tolerance that facilitates the insertion of said box for extracting electrical contacts 100 in the opening obtained in the finishing panel 300. The purpose of this dimensioning, in particular that relating to the depth 101, is to ensure an installation that does not engrave into the "underlying wall" 310 and, at the same time, allows the necessary electrical contacts to be made with the electrical line constituted by the" ribbon cable "200. In fact, another essential feature of said box for extracting electrical contacts 100 relates to the presence of at least one contact electrode, designed to implement an electrical contact with the electrical line constituted by the "ribbon cable" 200. Normally, the boxes for extracting electrical contacts 100 that are installed have a number of contact electrodes equal to the number of conductive strips 210 that are present in the "ribbon cable" 200 above which they are installed: therefore in Figure 2, a case is shown in which said box for extracting electrical contacts 100 comprises two electrodes, indicated with the number 120. Said contact electrodes 120 are represented in Figure 2 in an absolutely schematic and unrealistic way. The only essential characteristic that must be appreciated in the figure concerns their positioning: such that, when said box for extracting electrical contacts 100 according to the invention is installed, said contact electrodes 120 are pressed, each on top of a conductive straps 210, so as to ensure adequate electrical contact with the power line. It is observed that the "ribbon cable" 200 also includes an insulating protective sheath 220, and therefore it is necessary to take this into account to ensure effective electrical contact between a contact electrode 120 and the corresponding conductive tape 210: this means that it is not enough that the contact electrodes 120 are pressed over the "ribbon cable" 200.

As will be resumed also in the following of the present description, in which some examples of prototype embodiments will be shown, this contact can be easily guaranteed in different ways, which give rise to different variants of the same invention. In summary, two ways can be followed to obtain such a contact: either the protective sheath 220 is removed in the area where the contact must take place, or the sheath is pierced (therefore crossed) by the electrode when this is pressed on the "ribbon cable "200.

Following the first approach, for example, an operation can be envisaged to be performed simultaneously with the creation of the opening on the finishing panel 300 (or at a later time), and this operation consists in using a template and a suitable tool to scrape away the protective sheath, and quickly discover the conductive tape 210 exactly in the required areas, where the contact electrodes 120 will then be positioned. It is observed that the reverse operation of removing the box, and restoring the wall, will require the precaution (of simple execution too) to restore also a protective film over the "ribbon cable" 200, where the conductive strips 210 were uncovered.

Following the second approach, which provides for the perforation of the sheath, particular contact electrodes 120 can be conceived, for example, made by arranging one or more tips, of suitable length, on their contact face; an effective solution provides for arranging a plurality of tips well distributed over the entire contact face. These tips need only have a length of a few tenths of a millimeter, sufficient to pierce the protective sheath 220 and to touch the conductive tape 210.

A further essential feature of said box for extracting electrical contacts 100 according to the invention consists of the presence of an electrical power supply interface, indicated in Figure 2 with the number 110, offered externally, so that it is available for the connection of an external electrical load. In fact, said electrical interface 110 available for connecting an electrical load, extracts the voltage present on the power line implemented by means of the "ribbon cable" 200. In this way, it is possible to prepare and design at different times:
a) the electrical distribution within a building, and
b) the subsequent distribution, within the same building, of the points of access to the electricity grid.

Once outlined the essential characteristics that are required for a box 100, made according to the teachings of the present invention, suitable for extracting a power supply interface from a live line of an electrical system, wired with a "bus" architecture and made with "ribbon cables", in order to be able to feed a load, some essential operations can now be identified for the definition of an installation method.

It is noted that having an efficient, reliable and fast installation method is perfectly consistent with the application scenarios of the invention. In fact, all the proposed teachings find their maximum usefulness in contexts where the extraction of electrical power from the walls is required in a very widespread way (therefore many power points are needed) and in circumstances that cannot be completely planned at the time of construction of the building (therefore it is necessary to be able to extract electrical power access points with operational flexibility).

The first necessary operation consists in identifying the point in which to install the box for extracting electrical contacts 100 which, obviously, must be a point on the wall under which an electrical line made with a "ribbon cable" 200 passes.

Just from this first operation, it is evident that the distribution of the power supply must pre-exist, before the decision on the positioning of the access points to this electrical plant: this aspect substantially differentiates the methodology presented in the context of the present invention with respect to the known methodologies for the construction of electrical systems. In fact, the known art for the construction of electrical systems provides that the power supply is distributed (and carried) in predetermined points, which therefore must be decided before laying the cables; i.e., the power cables must be brought to the known predetermined points where the power supply must be available for connecting a load.

It is observed that the exact positioning of the installation point of the box for extracting electrical contacts 100 is considerably free, if the power supply lines have been widely distributed in all environments, but must be precisely identified, so that the subsequent positioning maneuver of the box for extracting electrical contacts 100, may happen exactly over the conductive strips. The required accuracy must be of the order of a small fraction of the width of the conductive tapes contained in the "ribbon cable", typically of the order of the millimeter.

In fact, it is observed that, if the position of the "ribbon cable" 200 (which is hidden under the surface finish panel 300) is not known with sufficient precision from the project data, this identification, which must be carried out with the necessary precision, can also be easily performed using a metal detector device. In other words, it may be a suitable instrumentation, based on known technology, eventually designed *ad-hoc,* using known technologies for detecting the presence of metal, and optimized specifically for this application. Moreover, this is a very specific application, in which many parameters are known, such as the electromagnetic properties of the metal sought (in fact, a specific known metal is sought, whose dimensions are also known), as well as the distance to which is to be found, below the finish panel 300.

The next operation, after identifying the point in which to install the box for extracting electrical contacts 100, consists in creating the opening on the finishing panel 300.

In order to perform this operation quickly and with the necessary precision, it is possible to use a special tool equipped with a blade suitable for cutting the material of which said finishing panel 300 is made: in the typical case, a plasterboard blade. The opening to be made consists in the removal of a rectangle of the finishing panel, without damaging either the "underlying wall" 310 and the "ribbon cable" 200; therefore, two couples of parallel cuts are required, characterized by good precision, especially regarding the depth of the cut. The tool for removing this rectangle from the finishing panel 300 must therefore have an adjustable blade to make cuts at two depths. Two cuts are parallel to the direction of the "ribbon cable" 200: one on one side of said "ribbon cable" 200, and the other on the opposite side, so that said ribbon cable is between said two cuts. Furthermore, said two cuts parallel to the direction of the "ribbon cable" 200 must be deep enough to completely cut, in all its thickness, the finishing panel 300, without significantly affecting the "underlying wall" 310, even if they can eventually touch it. The other two cuts, together with the previous two, complete the rectangle, and are transversal with respect to the "ribbon cable" 200: These last two transversal cuts, unlike the first two, must have a depth slightly less than the thickness of the finishing panel 300 , in order not to run the risk of damaging the "ribbon cable" 200.

The rectangle thus cut, therefore, remains attached to the finishing panel 300 only along the two transverse sides with respect to the "ribbon cable" 200, in which the two cuts does not completely pass through the finishing panel 300. Therefore, the rectangle to be removed is maintained attached to the rest of the finishing panel 300 only by the effect of a pair of very thin connections (the precision of the cut serves precisely to ensure that these two connections are very thin and slender). At this point, however, it is easy to tear off the rectangular piece of the finishing panel 300, since it will easily detach due to the thin connection highlighted above.

Once the "ribbon cable" 200, which adheres to the "underlying wall" 310, is visible, if the contact technique provides that the conductive strips 210 must be uncovered, also the execution this operation have to be done. Also in this case, in order to execute the operation of uncovering the conductive tapes 210 in the correct position, quickly and with the necessary precision, it is possible to use specially designed instruments. A template of the size of the opening can be placed over the "ribbon cable" 200, and this template, being associated with the specific electrical contact extraction box 100, will have holes exactly in the areas where the conductive strips 210 must be uncovered. For this operation of uncovering the conductors it is possible to use a special scraper, suitable for removing the layer of sheath left free from the holes of the template used.

At this point, the box for extracting electrical contacts 100 is inserted into the opening made in the finishing panel 300, and fixed to it, for example with screws. The dimensions of said box, and the positioning of the contact electrodes 120, will ensure electrical contact with the conductive strips 210, and the interface for the power supply will be ready to provide power to a generic load.

If the contact electrodes 120, on their contact surfaces, were equipped with micro-tips suitable for piercing the protective sheath 220, the operation of uncovering the conductive strips 210 of the "ribbon cable" 200 would not be necessary. Therefore, once the rectangle of the finishing panel 300 has been removed, and the opening to make the "ribbon cable" 200 accessible is made, you can directly proceed with the insertion of the box for extracting electrical contacts 100.

Note how this process of installing a box for extracting electrical contacts 100 according to the invention is an easily reversible process. In fact, each box can be simply removed, the "ribbon cable" 200 can be easily covered by applying an insulating protective film over it, and the opening on the finishing panel 300 can be closed by inserting a rectangle of the same material and of the appropriate size. The operation is then concluded with a simple final grouting.

Having clarified the general principles of the invention, both from the point of view of the system and from the methodological point of view, by means of figures 3, 4 and 5 some characteristics referring to prototype implementations, effectively applicable in the field, are presented, which help to describe further the invention highlighting further details of its embodiments, and making more appreciable its effectiveness and usefulness.

Figure 3a shows (being the drawing of a working prototype, it respects realistic proportions), in section, a box for extracting electrical contacts 100 according to the invention, in a form of implementation in which the contacts are made available by means of a low thickness socket. As in Figure 2, the surface of the "underlying wall" is indicated with the number 310 and the finishing panel with the number 300. The finishing panel 300 is interrupted to accommodate the box 100. A contact electrode, intersected by the section plane is indicated with the number 120, and protrudes until it touches the underlying wall, where the "ribbon cable" (not visible as it is very thin, in the dimensions shown in the figure) which constitutes the powered electric line adheres.

In Figure 3a you can see how the contact electrode 120 is in electrical continuity with a conducting element, shown better in Figure 3b, and designed to house the contacts of a plug indicated with the number 510.

It should be noted that the thickness of the finishing panel 300, typically 1.25 cm, plus the protrusion of the box for extracting electrical contacts 100, allow the housing of plugs according to the most common standards. So that, low thickness box, which does not require to penetrate deep into the wall where it is installed, may be realized.

The element containing the contact electrode 120, in the form of implementation of Figure 3a, is shown with greater clarity in the two axonometric views of Figure 3b. This element is made with a single piece of metal and includes a protrusion, indicated by the number 120, characterized by a certain elastic flexibility, and shaped to be pressed on the conductive line: this protrusion implements the contact electrode 120. On the opposite side, with respect to the contact electrode 120, two clips are formed which are suitable for tightening the electrodes of an electric plug. These clips are indicated with the number 110, as they implement the power supply interface offered to the outside by the box for extracting electrical contacts 100.

In the embodiment shown in Figures 3, each element containing a contact electrode 120 comprises two clips 110, since an electrical contact extraction box 100 is shown, designed to offer two electrical sockets. Each box for extracting electrical contacts 100 will therefore contain a number of elements containing a contact electrode 120, equal to the number of conductors present in the line from which the electrical interface is to be extracted.

In Figure 3c, two axonometric views offer an overall view of the considered form of implementation. Therefore, it is shown a box for extracting electrical contacts 100, containing three elements having a contact electrode 120, each with two clips 110; and said elements are arranged so as to:
✔ present the three contact electrodes 120 in correspondence with three different conductive strips of a "ribbon cable" suitable for carrying a voltage plus the neutral reference (therefore a three-conductor cable), as seen from the right view showing the side of the box 100 facing the "underlying wall"; and
✔ realize two sockets with three holes, suitable for coupling to plugs that take the voltage and neutral from the network, as seen from the left view showing the side of the box 100 facing the outside of the wall.

Figure 4 shows a template that can be associated with the box for extracting electrical contacts 100 according to the form of implementation proposed in figures 3. The template as a whole is indicated with the number 130, characterized by having dimensions corresponding to the opening that is made on the finishing panel 300, to insert the box for extracting electrical contacts 100 to be installed. Thanks to the correspondence of the dimensions, it is easy to place the template 130 above the conductive strips 210 of the "ribbon cable" 200, so that the holes on the template, indicated in Figure 4 with the number 230, leave uncovered the areas in which contacts must be made, and from which, therefore, the insulating protection sheath 220 must be removed.

However, this removal operation of the protective sheath 220 is not always necessary. In fact, contact electrodes 120 can be conceived capable of making an electrical contact with a conductive strip 210 even if this is covered by a thin protective insulating sheath.

Figure 5 schematically represents another embodiment of a box for extracting electrical contacts according to the invention, in which the contact electrodes, as usual indicated with the number 120, have a particular face designed to be pressed on a "ribbon cable" of said power line. The detail that makes them special is also clearly visible in the enlargement proposed in Figure 5, where it is noted that said face has a substantially flat shape from which protrude a plurality of micro-tips made, obviously, with a conductive material. These micro-tips indicated in Figure 5 with the number 127, and their length is sufficient to pierce the insulating sheath of said "ribbon cable"; so that when said electrodes are pressed onto the "ribbon cable", said micro-tips 127 pierce the insulating sheath and come into electrical contact with the conductive strips 210, which are located inside said "ribbon cable".

The type of contact presented in Figure 5, at the expense of a smaller contact surface, which introduces a greater impedance compared to contacts on uncovered strip, greatly simplifies the installation process as it eliminates the phase of uncovering the conductive strips 210 (which is particularly laborious).

The form of implementation proposed in Figure 5, on the other hand, does not cause significant changes in the process of removing the box and restoring the wall; in fact it is always advisable to cover the areas of the "ribbon cable" where the contact was made with a protective film, since in this area the protective sheath is damaged due to the drilling made with the micro-tips 127.

Ultimately, the box for extracting electrical contacts from an electric line made by means of a "ribbon cable", laid under a surface finishing panel of a wall or a ceiling, made and installed according to the teachings of the present invention, with respect to the traditional solutions proposed by the known art, appears much more suitable to support the wiring needs according to the requirements that arise in the context of the most plausible evolutionary scenarios.

## Claims

1. A system comprising a box (100) for extracting electrical contacts, a "ribbon cable" (200) and a finishing panel (300), suited to cover an underlying wall (310); and said system comprises:
a. said box (100) for extracting electrical contacts is configured to operate with a live electric line made with said "ribbon cable" (200), and
b. said "ribbon cable" (200) is configured to be laid on said underlying wall (310) which is configured to be covered with said surface finishing panel (300) of a wall or ceiling or floor; and
c. said "ribbon cable" (200) comprises at least one conductive strip (210), made of a flat, wide and thin conductor, and one of its faces is adhering to said underlying wall (310), and
d. when installed, the box (100) is partially inserted in an opening in the surface finishing panel (300), above the trait of said electric line where it is intended to extract the contacts to be made available outside, and it is inserted only for a first thickness (101) corresponding to the thickness (301) of said surface finishing panel in such a way that said underlying wall (310) remains intact even when said box (100) for extracting electrical contact is installed; and
e. the box (100) comprises at least one contact electrode (120), having a face designed to be pressed onto the "ribbon cable" of said electric line, and said face has a substantially flat shape, and it is adapted to realize electric contact with the face of said at least one conductive strip (210) opposite the face adhering to the underlying wall (310).

2. System according to claim 1, wherein said at least one contact electrode (120) comprised in said box (100) has, on the face having a substantially flat shape, designed to be pressed onto the "ribbon cable" of said electric line, a plurality of protruding micro-tips (127) of conductive material, the length of which is sufficient to pierce the thickness of the insulating sheath (220) of said "ribbon cable" (200), so that when said at least one contact electrode (120) is pressed on said "ribbon cable" (200), said micro-tips (127) pierce said insulating sheath (220) and come into electric contact with the conductive strips (210) that are inside said "ribbon cable" (200).

3. System according to claim 1, wherein said at least one contact electrode (120) comprised in said box (100) is substantially made with a piece of conductive metal, and said one piece of conductive metal is shaped so that, when said box (100) for extracting electric contacts is installed, on the side facing the environment, a clip suitable to tighten an electrode of an electric plug is obtained.

4. Method for installation of an electrical contacts extracting system, using a system according to that indicated in any of the claims from 1 to 3, wherein the method comprises at least the following operations:
a. identification of the position of the wall in which to install the box (100) for extracting electrical contacts, and said position corresponds to an area of the wall below which passes an electric line made with a "ribbon cable" (200);
b. execution of two cuts parallel to the direction of said electric line made with a "ribbon cable" (200), deep enough to completely cross said surface finishing panel (300), without significantly affecting the underlaying wall (310), and said two cuts parallel to the direction of the electric line, are positioned on the two sides of said electric line;
c. execution of two cuts transversal to the direction of said electric line made with a "ribbon cable" (200), deep enough to cross almost completely, but not completely, said surface finishing panel (300), and said two cuts transverse to the direction of the electric line, are positioned so as to form, together with the previous two cuts, executed in the previous step "b", a rectangle;
d. realization of an opening on the finishing panel (300), by removing the rectangle of the surface finishing panel (300) determined by the cuts made in the previous steps "b" and "c";
g. insertion of said box (100) for extracting electric contacts according to that indicated in any of the claims from 1 to 3, in the opening left free by the removal of the rectangle of the surface finishing panel (300);
h. fixing said box (100) for extracting electric contacts to the surface finishing panel (300) .

5. Method for installation of an electrical contacts extracting system according to claim 4, wherein a further intermediate operation of uncovering the conductive strips (210) contained in said "ribbon cable" (200), is included between the operation "d" and the operation "g", and said further intermediate operation, in turn includes at least the following steps:
e. positioning a template (130) on the underlying wall (310), and the dimension of said template (130) are the same of those of said removed rectangle of surface finishing panel, and said template (130) has a number of holes (230) equal to the number of conductive strips (210) contained in the trait of "ribbon cable" (200) brought to light due to the removal of said surface finish panel rectangle, and said template (130) is positioned so as to cover the "ribbon cable" (200), leaving however uncovered only the areas of said "ribbon cable" (200) in correspondence with said holes (230);
f. scraping and removal of the protective sheath (220) of the said "ribbon cable" (200), in the areas corresponding to the said holes (230) of the said template (130), positioned as stated in the previous point "e".

6. Method for installation of an electrical contacts extracting system according to claim 4, wherein the operation performed at point "a" is performed using a metal detector device.

7. Method for the removal of an electrical contacts extracting system installed according to claim 4, **characterized in that** it comprises at least the following operations:
a. removing the box (100) for extracting electrical contacts, detaching it from the surface finishing panel (300) to which it had previously been fixed;
b. restoring the insulation of the "ribbon cable" (200), by applying an insulating film, at least over the areas where the electric contacts with the contact electrodes (120) of the box (100) for extracting electrical contacts had been implemented;
c. closure of the opening in which said box (100) for extracting electrical contacts was inserted, by inserting a piece of surface finishing panel (300), like the one used in the rest of the wall, and of the same shape and size of said opening.

## Patentansprüche

1. Ein system, inklusive einer Kasten (100) zum herausziehen elektrischer kontakte, einem "flachbandkabel" (200) und einer oberflächenveredelung panel (300), geeignet zum abdecken einer darunter liegenden wand (310); und das system umfasst:
a. der Kasten (100) zum herausziehen elektrischer kontakte so konfiguriert ist, dass er mit einer stromführenden elektrischen leitung betrieben werden kann, die aus dem "Flachbandkabel" (200) besteht, und
b. das "Flachbandkabel" (200) so konfiguriert ist, dass es auf der darunter liegenden Wand (310) verlegt werden kann, die so konfiguriert ist, dass sie mit der oberflächenveredelung Panel (300) einer wand, decke oder eines bodens abgedeckt wird; und
c. das "Flachbandkabel" (200) umfasst mindestens einen leitenden Streifen (210), der aus einem flachen, breiten und dünnen Leiter besteht und eine seiner flächen an der darunter liegenden Wand (310) haftet, und
d. im eingebauten zustand wird der Kasten (100) teilweise in eine Öffnung in der oberflächenveredelung Panel (300) über dem verlauf der elektrischen leitung eingeführt, wo die kontakte herausgezogen werden sollen, die nach außen zugänglich gemacht werden sollen, und es wird nur bis zu einer ersten dicke (101) eingesetzt, die der Dicke (301) der oberflächenveredelung panel entspricht, und zwar so, dass die darunter liegende Wand (310) intakt bleibt, auch wenn der kasten (100) zur extraktion des elektrischen kontakts installiert ist; und
e. das Kasten (100) umfasst mindestens eine kontaktelektrode (120), die eine fläche aufweist, die dazu bestimmt ist, auf das "flachbandkabel" der elektrischen leitung gedrückt zu werden, wobei die fläche eine im wesentlichen flache form aufweist und dazu geeignet ist, einen elektrischen kontakt herzustellen wobei die seite des mindestens einen leitfähigen Streifens (210), die der seite gegenüberliegt, an der darunter liegenden Wand (310) haftet.

2. System nach Anspruch 1, wobei die mindestens eine kontaktelektrode (120), die in dem kasten (100) enthalten ist, auf der Fläche eine im Wesentlichen flache form aufweist, die dazu bestimmt ist, auf das "flachbandkabel" der elektrischen Leitung gedrückt zu werden mehrere hervorstehende mikrospitzen (127) aus leitendem material, deren Länge ausreicht, um die dicke der isolierhülle (220) des "flachbandkabels" (200) zu durchdringen, so dass, wenn die mindestens eine kontaktelektrode ( 120) auf das "flachbandkabel" (200) gedrückt wird, durchdringen die mikrospitzen (127) die isolierhülle (220) und kommen in elektrischen kontakt mit den leitenden streifen (210), die sich im Inneren des "flachbandkabels" (200).

3. System nach Anspruch 1, wobei die mindestens eine kontaktelektrode (120), die in der kasten (100) enthalten ist, im Wesentlichen aus einem stück leitendem metall besteht und das eine Stück leitenden Metalls so geformt ist, dass, wenn die Box (100) zum herausziehen elektrischer kontakte angebracht wird, erhält man auf der der umgebung zugewandten seite einen clip, der zum festziehen einer elektrode eines elektrischen steckers geeignet ist.

4. Verfahren zur installation eines systems zum herausziehen elektrischer kontakte unter verwendung eines systems nach einem der ansprüche 1 bis 3, wobei das verfahren mindestens die folgenden vorgänge umfasst:
a. identifizierung der position der wand, in der der kasten (100) zum herausziehen elektrischer kontakte installiert werden soll, und diese position entspricht einem bereich der Wand, unter dem eine elektrische leitung verläuft, die aus einem "flachbandkabel" (200) besteht;
b. ausführung von zwei schnitten parallel zur richtung der elektrischen leitung mit einem "flachbandkabel" (200), das tief genug ist, um die oberflächenveredelung panel (300) vollständig zu durchqueren, ohne die darunter liegende wand (310) wesentlich zu beeinträchtigen, und die beiden schnitte parallel zur richtung der elektrischen leitung, sind auf beiden seiten der elektrischen leitung positioniert;
c. ausführung von zwei schnitten quer zur richtung der elektrischen leitung mit einem "flachbandkabel" (200), das tief genug ist, um die oberflächenveredelung panel (300) fast vollständig, aber nicht vollständig zu durchqueren, und der beiden schnitte quer zur richtung der elektrischen leitung werden so positioniert, dass sie zusammen mit den beiden vorherigen schnitten, die im vorherigen schritt "b" ausgeführt wurden, ein rechteck bilden;
d. herstellung einer Öffnung in der oberflächenveredelung panel (300) durch Entfernen des Rechtecks der oberflächenveredelung panel (300), das durch die in den vorherigen schritten "b" und "c" vorgenommenen schnitte bestimmt wurde;
g. einsetzen des kastens (100) zum herausziehen elektrischer kontakte nach einem der ansprüche 1 bis 3 in die Öffnung, die durch das entfernen des rechtecks der oberflächenveredelung panel (300) freigelassen wurde;
h. befestigen des kastens (100) zum herausziehen der elektrischen kontakte an der oberflächenveredelung panel (300).

5. Verfahren zur Installation eines Systems zum herausziehen elektrischer kontakte nach anspruch 4, wobei zwischen dem vorgang "d" und dem vorgang "g", ein weiterer zwischenvorgang des freilegens der im "flachbandkabel" (200) enthaltenen leitenden streifen (210) ist enthalten, wobei dieser weitere zwischenvorgang wiederum mindestens die folgenden schritte umfasst:
e. positionieren einer schablone (130) auf der darunter liegenden wand (310), wobei die abmessungen der schablone (130) denen des entfernten rechtecks der oberflächenveredelung panel entsprechen und die schablone (130) eine anzahl von löchern (230) aufweist gleich der anzahl der leitenden streifen (210), die in dem abschnitt des "flachbandkabel" (200) enthalten sind, der durch das entfernte rechteck der oberflächenveredelung panel ans licht gebracht wird, und die schablone (130) so positioniert ist, dass sie das "flachbandkabel" (200) abdeckt, wobei jedoch nur die gereiche des "flachbandkabels" (200) in Übereinstimmung mit den löchern (230) unbedeckt bleiben;
f. abkratzen und entfernen der schutzhülle (220) des "flachbandkabels" (200) in den bereichen, die den löchern (230) der schablone (130) entsprechen und wie im vorherigen punkt "e" angegeben positioniert sind.

6. Verfahren zur installation eines Systems zur extraktion elektrischer kontakte nach anspruch 4, wobei der an punkt "a" durchgeführte vorgang unter verwendung einer metalldetektorvorrichtung durchgeführt wird.

7. Verfahren zum entfernen eines nach anspruch 4 installierten systems zum extraktion elektrischer kontakte, **dadurch gekennzeichnet, dass** es mindestens die folgenden vorgänge umfasst:
a. entfernen des kastens (100) zum extraktion der elektrischen kontakte und lösen desselben von der oberflächenveredelung panel (300), an der er zuvor befestigt war;
b. wiederherstellen der isolierung des "flachbandkabels" (200) durch aufbringen einer isolierfolie zumindest über die bereiche, in denen die elektrischen kontakte mit den kontaktelektroden (120) der kastens (100) hergestellt wurden;
c. verschließen der Öffnung, in die der kasten (100) eingesetzt wurde, durch einsetzen eines stücks einer oberflächenveredelung panel (300), wie der, der im rest der wand verwendet wird, und von der gleichen form und größe wie die Öffnung.

## Revendications

1. Système comprenant un boîte (100) pour extraire des contacts électriques, un «câble ruban» (200) et un panneau de finition (300), adapté pour recouvrir un mur sous-jacent (310); et ledit système comprend:
a. ledit boîte (100) d'extraction de contacts électriques est configuré pour fonctionner avec une ligne électrique sous tension réalisée avec ledit « câble ruban » (200), et
b. ledit « câble ruban » (200) est configuré pour être posé sur ledit mur sous-jacent (310) qui est configuré pour être recouvert dudit panneau de finition (300) de surface d'un mur ou d'un plafond ou d'un sol; et
c. ledit « câble ruban » (200) comprend au moins une bande conductrice (210), constituée d'un conducteur plat, large et fin, et une de ses faces adhère à ladite mur sous-jacente (310), et
d. une fois installé, le boîte (100) est partiellement inséré dans une ouverture du panneau de finition (300) de surface, au-dessus du trait de ladite ligne électrique où il est destiné à extraire les contacts pour être mis à disposition à l'extérieur, et il est inséré uniquement pour une première épaisseur (101) correspondant à l'épaisseur (301) dudit panneau de finition de surface de telle sorte que ladite mur sous-jacente (310) reste intacte même lorsque ledit boîte (100) d'extraction de contact électrique est installé ; et
e. le boîte (100) comprend au moins une électrode de contact (120), ayant une face conçue pour être pressée sur le "câble ruban" de ladite ligne électrique, et ladite face a une forme sensiblement plate, et elle est adaptée pour réaliser un contact électrique avec la face de ladite au moins une bande conductrice (210) opposée à la face adhérant à le mur sous-jacente (310).

2. Système selon la revendication 1, dans lequel ladite au moins une électrode de contact (120) comprise dans ledit boîte (100) présente, sur la face ayant une forme sensiblement plate, conçue pour être plaquée sur le « câble ruban » de ladite ligne électrique, un pluralité de micro-pointes (127) saillantes en matériau conducteur dont la longueur est suffisante pour percer l'épaisseur de la gaine isolante (220) dudit "câble ruban" (200), de sorte que lorsque ladite au moins une électrode de contact (120) est pressé sur ledit « câble ruban » (200), lesdites micro-pointes (127) percent ladite gaine isolante (220) et entrent en contact électrique avec les bandes conductrices (210) qui se trouvent à l'intérieur dudit « câble ruban » (200).

3. Système selon la revendication 1, dans lequel ladite au moins une électrode de contact (120) comprise dans ledit boîte (100) est sensiblement constituée d'une pièce de métal conducteur, et ladite pièce de métal conducteur est façonnée de telle sorte que, lorsque ladite boîte (100) pour extraire les contacts électriques est installé, du côté tourné vers l'environnement, on obtient un clip adapté pour serrer une électrode d'une prise électrique.

4. Procédé d'installation d'un système d'extraction de contacts électriques, utilisant un système selon celui indiqué dans l'une quelconque des revendications 1 à 3, dans lequel le procédé comprend au moins les opérations suivantes:
a. identification de la position du mur dans laquelle installer le boîte (100) d'extraction des contacts électriques, et ladite position correspond à une zone du mur en dessous de laquelle passe une ligne électrique réalisée avec un "câble ruban" (200);
b. exécution de deux coupes parallèles à la direction de ladite ligne électrique réalisées avec un "câble ruban" (200), suffisamment profondes pour traverser complètement ledit panneau de finition de surface (300), sans affecter de manière significative le mur sous-jacent (310), et lesdites deux coupes parallèlement à la direction de la ligne électrique, sont positionnés des deux côtés de ladite ligne électrique;
c. exécution de deux coupes transversales à la direction de ladite ligne électrique réalisées avec un "câble ruban" (200), suffisamment profondes pour traverser presque complètement, mais pas complètement, ledit panneau de finition de surface (300), et lesdites deux coupes transversales à la direction de la ligne électrique, sont positionnés de manière à former, avec les deux découpes précédentes, exécutées à l'étape "b" précédente, un rectangle;
d. réalisation d'une ouverture sur le panneau de finition (300), en supprimant le rectangle du panneau de finition de surface (300) déterminé par les découpes réalisées aux étapes précédentes "b" et "c";
g. insertion dudit boîte (100) d'extraction de contacts électriques selon celui indiqué dans l'une quelconque des revendications 1 à 3, dans l'ouverture laissée libre par la suppression du rectangle du panneau de finition de surface (300);
h. fixation dudit boîte (100) d'extraction de contacts électriques au panneau de finition de surface (300).

5. Procédé d'installation d'un système d'extraction de contacts électriques selon la revendication 4, dans lequel une autre opération intermédiaire de découverte des bandes conductrices (210) contenues dans ledit « câble ruban » (200), est incluse entre l'opération « d » et l'opération « g", et ladite autre opération intermédiaire comprend à son tour au moins les étapes suivantes:
e. positionner un gabarit (130) sur le mur sous-jacente (310), et la dimension dudit gabarit (130) est la même que celle dudit rectangle retiré du panneau de finition de surface, et ledit gabarit (130) comporte un certain nombre de trous (230) égal au nombre de bandes conductrices (210) contenues dans le trait de "câble ruban" (200) mis en évidence du fait de la suppression dudit rectangle de panneau de finition de surface, et ledit gabarit (130) est positionné de manière à recouvrir le "câble ruban" (200), laissant toutefois découvertes uniquement les zones dudit "câble ruban" (200) en correspondance avec lesdits trous (230);
f. grattage et retrait de la gaine de protection (220) dudit "câble ruban" (200), dans les zones correspondant lesdits trous (230) dudit gabarit (130), positionnés comme indiqué au point "e" précédent.

6. Procédé d'installation d'un système d'extraction de contacts électriques selon la revendication 4, dans lequel l'opération effectuée au point "a" est réalisée à l'aide d'un dispositif détecteur de métaux.

7. Procédé de dépose d'un système d'extraction de contacts électriques installé selon la revendication 4, **caractérisé en ce qu'**il comprend au moins les opérations suivantes:
a. retirer le boîte (100) d'extraction des contacts électriques, le détacher du panneau de finition de surface (300) sur lequel il avait été préalablement fixé;
b. restaurer l'isolation du "câble ruban" (200), par application d'un film isolant, au moins sur les zones où les contacts électriques avec les électrodes de contact (120) du boîte (100) d'extraction des contacts électriques avaient été réalisés;
c. fermeture de l'ouverture dans laquelle ledit boîte (100) d'extraction des contacts électriques a été inséré, en insérant un morceau de panneau de finition de surface (300), comme celui utilisé dans le reste du mur, et de même forme et taille dudit ouverture.
